# EUROPÄISCHE PATENTSCHRIFT

(11) **EP 1 706 302 B1**
(45) Veröffentlichungstag und Bekanntmachung des Hinweises auf die Patenterteilung: **22.08.2007**
(21) Anmeldenummer: 04804865.6
(22) Anmeldetag: 15.12.2004
(51) Int. Cl.: B60T 8/38, B60T 11/232, B60T 11/16

(54) **HAUPTZYLINDER INSBESONDERE FÜR EIN GEREGELTES BREMSSYSTEM**
MASTER CYLINDER, ESPECIALLY FOR A REGULATED BRAKE SYSTEM
MAITRE-CYLINDRE DESTINE EN PARTICULIER A UN SYSTEME DE FREINAGE REGULE

(30) Priorität: 09.01.2004 DE 102004001612; 26.11.2004 DE 102004057137
(43) Veröffentlichungstag der Anmeldung: 04.10.2006
(73) Patentinhaber: Continental Teves AG & Co. oHG, 60488 Frankfurt (DE)
(72) Erfinder: DROTT, Peter, 65936 Frankfurt/M (DE); KÖNIG, Harald, 61239 Ober-Mörlen (DE); JUNGMANN, Udo, 64546 Mörfelden (DE); BISCHOFF, Andreas, 61118 Bad Vilbel (DE); LOKE, Jörg, 65611 Brechen (DE); KÜSTER, Mathias, 38518 Gifhorn (DE)
(86) Internationale Anmeldenummer: PCT/EP2004/053516
(87) Internationale Veröffentlichungsnummer: WO 2005/066005

(56) Entgegenhaltungen:
- EP-A- 0 918 005
- WO-A-96/23683
- DE-A1- 10 120 913

## Beschreibung

Die Erfindung betrifft einen Hauptzylinder, insbesondere für ein geregeltes Bremssystem, mit wenigstens einem, in einem Gehäuse verschiebbaren Kolben, der mittels eines, in einer Ringnut des Gehäuses angeordneten Dichtelementes gegenüber einem Druckraum abgedichtet ist, welcher durch im Kolben ausgebildete Querbohrungen mit einem drucklosen Nachlaufraum verbindbar ist.

Ein derartiger Hauptzylinder ist beispielsweise aus der DE 101 20 913 A1 oder EP 0 918 005 A bekannt, wobei die Querbohrungen einen kleinen Querschnitt aufweisen, um den Leerweg des Hauptzylinders möglichst klein zu halten. Bei der Verwendung in einem geregelten Bremssystem, wie beispielsweise ein Bremssystem mit Antriebsschlupfregelung (ASR) oder Elektronischem-Stabilitäts-Programm (ESP), wird im Falle eines Regeleingriffes von einer Pumpe Druckmittel von einem Druckmittelbehälter über den Hauptzylinder nachgesaugt. Nachteilig hierbei ist, dass der kleine Querschnitt der Querbohrungen einen zu großen Drosselwiderstand erzeugt und das benötigte Druckmittel der Pumpe nicht schnell genug bereitgestellt werden kann.

Aus der EP 0 807 042 A1 ist es bekannt, die Querbohrungen als in Umfangrichtung des Kolbens verlaufende Schlitze auszubilden. Da eine Außenseite des Kolbens (Mantelfläche) der Führung des Kolbens dient, müssen die Schlitze auf der Außenseite des Kolbens entgratet werden. Hierfür wird vorgeschlagen, die Schlitze im Nutgrund einer umlaufenden Außennut anzuordnen, wobei auch die umlaufende Außennut bearbeitet werden muss, damit keine scharfen Kanten entstehen und das Dichtelement nicht beschädigt wird. Weiter ist nachteilig, dass eine Innendichtlippe des Dichtelementes beim Überfahren der umlaufenden Außennut durch eine Vorspannung in die Außennut hineingedrängt wird, was ebenfalls zu einer Beschädigung oder einer Verdrehung der Innendichtlippe führen kann.

Der Erfindung liegt daher die Aufgabe zugrunde, einen dahingehend verbesserten Hauptzylinder bereitzustellen.

Erfindungsgemäß wird die Aufgabe dadurch gelöst, dass auf einer Innenseite des Kolbens Ausnehmungen vorgesehen sind, in welche die Querbohrungen münden. Hierdurch entfällt einerseits eine aufwendige Bearbeitung der Außenseite des Kolbens, andererseits wird eine Lochlänge der Querbohrungen, d.h. die axiale Ausdehnung der Querbohrungen, reduziert, wodurch eine Verringerung des Drosselwiderstandes erreicht wird. Zusätzlich kann der Leerweg des Hauptzylinders klein gehalten werden.

Um die Herstellbarkeit des Kolbens zu vereinfachen, weist der Kolben an einer Seite eine im wesentlichen topfförmige Wandung mit einem ersten Innendurchmesser und einem zweiten Innendurchmesser, wobei der zweite Innendurchmesser größer ist als der erste Innendurchmesser, und wobei die Querbohrungen in einem Bereich zwischen dem ersten und dem zweiten Innendurchmesser angeordnet sind.

In vorteilhafter Weiterbildung der Erfindung sind die Ausnehmungen als eine umlaufende, radiale Innennut ausgebildet, welche mit geringem Aufwand herstellbar ist. Eine Nachbearbeitung der Innennut ist nicht erforderlich. Gleichzeitig kann der Kolben axiale Kräfte, die beim Anschlagen des Kolbens an das Gehäuse bzw. an den zweiten Kolben auf den Kolben wirken, ohne eine Deformierung aufnehmen, da die Wandstärke des Kolbens am Ende nicht geschwächt wird.

Eine andere vorteilhafte Ausführungsform der Erfindung wird dadurch erreicht, dass die Ausnehmungen als Zahnzwischenräume eines Zahnprofils auf der Innenseite des Kolbens ausgebildet sind, wobei sich die Ausnehmungen vorteilhafterweise in axialer Richtung bis zum Ende des Kolbens erstrecken. Der Kolben mit den Ausnehmungen kann somit im Tiefziehverfahren hergestellt werden, ohne dass für die Herstellung der Ausnehmungen ein zusätzlicher Bearbeitungsaufwand notwendig ist. Gleichzeitig wird die Wandstärke des Kolbens am Ende nur partiell reduziert, wodurch der Kolben die auftretenden axialen Kräfte ohne eine Deformierung aufnehmen kann.

Um eine besonders einfache Fertigung der Querbohrungen zur gewährleisten, weisen gegenüberliegende Querbohrungen parallele Begrenzungsflächen auf. Dadurch können gegenüberliegende Querbohrungen praktisch gleichzeitig hergestellt werden.

Vorzugsweise weisen die Querbohrungen die Form eines Langloches auf, wodurch der Drosselwiderstand weiter reduziert werden kann.

In vorteilhafter Ausgestaltung der Erfindung sind die Querbohrungen durch Umformen, wie beispielsweise Stanzen, oder durch Verfahren eines Bohrers in radialer Richtung zu einer Längsachse des Kolbens herstellbar.

Als ein günstiges Verhältnis Lochlänge zu Lochdurchmesser bzw. Lochlänge zu Breite der Querbohrungen hat sich bei Versuchen ein Verhältnis mit dem Wert von ca. 1 herausgestellt.

Nachstehend wird die Erfindung anhand der Zeichnung erläutert, welche Ausführungsformen zeigt. Es zeigt jeweils stark schematisiert:
- Figur 1: eine ersten Ausführungsform eines erfindungsgemäßen Hauptzylinders im Längsschnitt;
- Figur 2: einen ersten Kolben der ersten Ausführungsform eines erfindungsgemäßen Hauptzylinders im Längsschnitt;
- Figur 3: eine Teilansicht des Kolbens gemäß Fig. 2 im Schnitt entlang der Linie B-B in Fig. 2;
- Figur 4: eine Teilansicht eines ersten Kolbens einer zweiten Ausführungsform im Längsschnitt;
- Figur 5: eine Teilansicht des Kolbens gemäß Fig. 4 im Schnitt entlang der Linie C-C in Fig. 4;
- Figur 6: eine Teilansicht des Kolbens gemäß Fig. 4 in perspektivischer Darstellung;
- Figur 7: eine dritte Ausführungsform eines erfindungsgemäßen Hauptzylinders im Längsschnitt;
- Figur 8: eine Teilansicht eines ersten Kolbens der dritten Ausführungsform eines erfindungsgemäßen Hauptzylinders und
- Figur 9: eine Teilansicht des Kolbens gemäß Fig. 8 im Schnitt im Bereich der Querbohrungen.

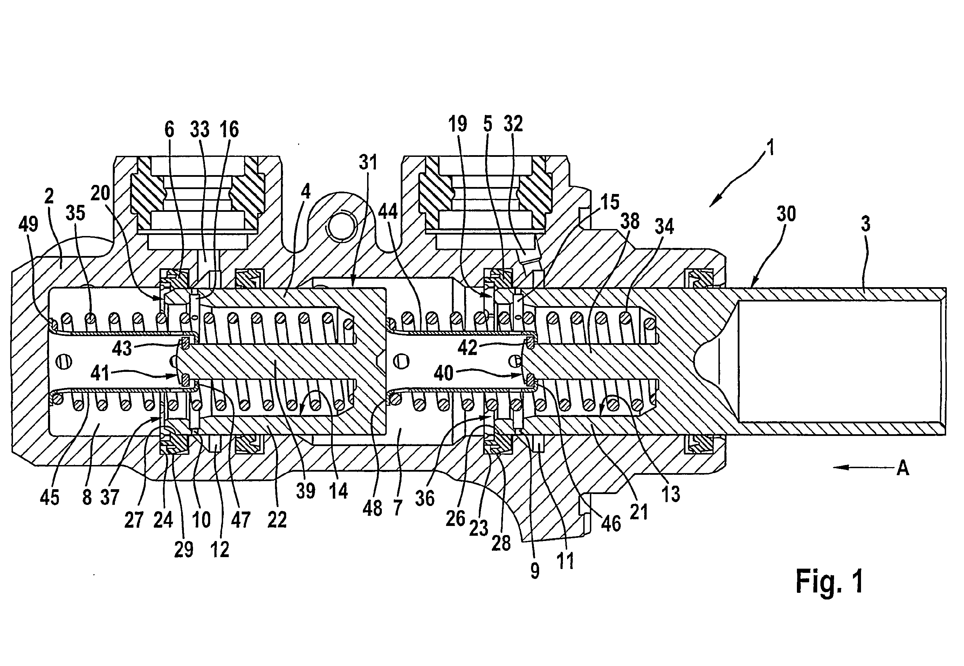

Fig. 1 zeigt im Längsschnitt eine erste Ausführungsform eines Hauptzylinders 1, welcher beispielsweise in einem geregelten Bremssystem mit Antischlupfregelung (ASR) und/oder Elektronischem-Stabilitäts-Programm (ESP) Verwendung findet und in Plunger- und Tandembauweise ausgebildet ist. Die Funktionsweise eines derartigen Hauptzylinders 1 ist grundsätzlich bekannt, so dass weitgehend nur die erfindungswesentlichen Merkmale beschrieben werden.

Der Hauptzylinder 1 umfasst einen ersten und einen zweiten, in einem Gehäuse 2 verschiebbaren Kolben 3,4, wobei in einer Ringnut 23,24 des Gehäuses 2 ein kreisringförmiges Dichtelement 5,6 mit einer dynamisch beaufschlagten Innendichtlippe 26,27 sowie mit einer statisch beaufschlagten Außendichtlippe 28,29 vorgesehen ist. Die dynamisch beaufschlagte Innendichtlippe 26,27 liegt mit einer ersten Dichtfläche an dem Kolben 3,4 an und die statisch beaufschlagte Außendichtlippe 28,29 liegt mit einer zweiten Dichtfläche an einem Boden der Ringnut 23,24 an. Eine Außenseite 30,31 der Kolben 3,4 dienen als Führungsfläche.

Ein erster und ein zweiter Druckraum 7,8 sind in einem, in Fig. 1 dargestellten, unbetätigten Zustand des Hauptzylinders 1 über einen Druckmittelkanal 32,33 und einen Nachlaufraum 11,12 im Gehäuse 2 sowie über Querbohrungen 9,10 in einer topfförmigen Wandung 21,22, die an einer Seite 36,37 des ersten und des zweiten Kolbens 3,4 vorgesehen ist, mit einem nicht dargestellten, drucklosen Druckmittelbehälter verbunden. Je nach Ausführung des Hauptzylinders 1 sind zwischen vier und vierundzwanzig Querbohrungen 9,10 am Umfang des Kolbens 3 gleichmäßig verteilt angeordnet. Die Kolben 3,4 sind dabei mittels Druckfedern 34,35 vorgespannt.

Die Druckfeder 34,35 ist zumindest teilweise innerhalb der topfförmigen Wandung 21,22 angeordnet. Die Wandung 21,22 wird mittig von einem zentrischen Zapfen 38,39 durchragt, der vor seinem axialen Austritt aus der Wandung 21,22 endet. Dieses Ende 40,41 ist mit einem Anschlag 42,43 für eine Hülse 44,45 versehen, der mit einem Kragen 46,47 derart zusammenwirkt, dass die Hülse 44,45 relativ zu dem Zapfen 38,39 begrenzt teleskopierbar ist. Mit anderen Worten wird die Hülse 44,45 mit der Druckfeder 34,35 bei Betätigung in das Kolbeninnere gedrängt. Wie zu ersehen ist, handelt es sich bei dem Anschlag 42,43 vorzugsweise um eine, an den Zapfen 38,39 angenietete - insbesondere Taumelvernietete - Ringscheibe. Das anderseitige Ende der Hülse 44,45 verfügt über den tellerartigen Kragen 48,49 zur Anlage der Druckfeder 34,35.

Zur Betätigung des Hauptzylinders 1 wird der erste Kolben 3 in Betätigungsrichtung A verschoben. Dabei wird die Bewegung des ersten Kolbens 3 über die Druckfeder 34 auf den zweiten Kolben 4 übertragen. Sobald sich die Querbohrungen 9,10 im Bereich der Dichtelemente 5,6 befinden, ist der sogenannte Leerweg des Hauptzylinders 1 durchfahren, da kein Druckmittel mehr von den Nachlaufräumen 11,12 durch die Querbohrungen 9,10 in die Druckräume 7,8 gelangen kann. Die Verbindung der Druckräume 7,8 mit dem Druckmittelbehälter ist unterbrochen und in den Druckräumen 7,8 wird Druck aufgebaut.

Die zwei hintereinander angeordneten Kolben 3,4 des Hauptzylinders 1 sind in ihrem Aufbau und ihrer Funktionsweise nahezu identisch, so dass nur der erste Kolben 3 weiter beschrieben wird.

Bei einem ASR- oder ESP-Eingriff kann es notwendig sein, bei unbetätigtem oder betätigtem Kolben 3 Druckmittel aus dem Druckmittelbehälter über den Druckraum 7 in Richtung Radbremsen nachzusaugen, was vorzugsweise mittels einer Pumpe erfolgt, deren Eingang wahlweise mit den Druckräumen 7,8 des Hauptzylinders 1 oder mit den Radbremsen verbindbar ist, um in Richtung Radbremsen oder in Richtung Hauptzylinder 1 zu fördern (Rückförderprinzip). Hierzu wird bei einem ASR-Eingriff in unbetätigtem Zustand des Hauptzylinders 1 das Druckmittel aus dem Druckmittelbehälter über den Druckmittelkanal 32, den Nachlaufraum 11, die Querbohrungen 9 und den Druckraum 7 nachgesaugt. Bei einem ESP-Eingriff in betätigtem Zustand des Hauptzylinders 1 erfolgt die Nachsaugung zusätzlich durch Überströmen der Außendichtlippe 28 des Dichtelementes 5, indem diese durch den Saugdruck in Richtung Innendichtlippe 26 umklappt und hierdurch die Dichtfläche der Außendichtlippe 28 nicht mehr am Boden der Ringnut 23 anliegt. Um der Pumpe bei einem ASR- oder ESP-Eingriff insbesondere in unbetätigter Stellung des Hauptzylinders 1 schnell genügend Druckmittel zur Verfügung zu stellen, ist es notwendig, den Drosselwiderstand der Querbohrungen 9 so gering wie möglich zu halten, wobei jedoch auch der Leerweg des Hauptzylinders 1 möglichst klein gehalten werden soll.

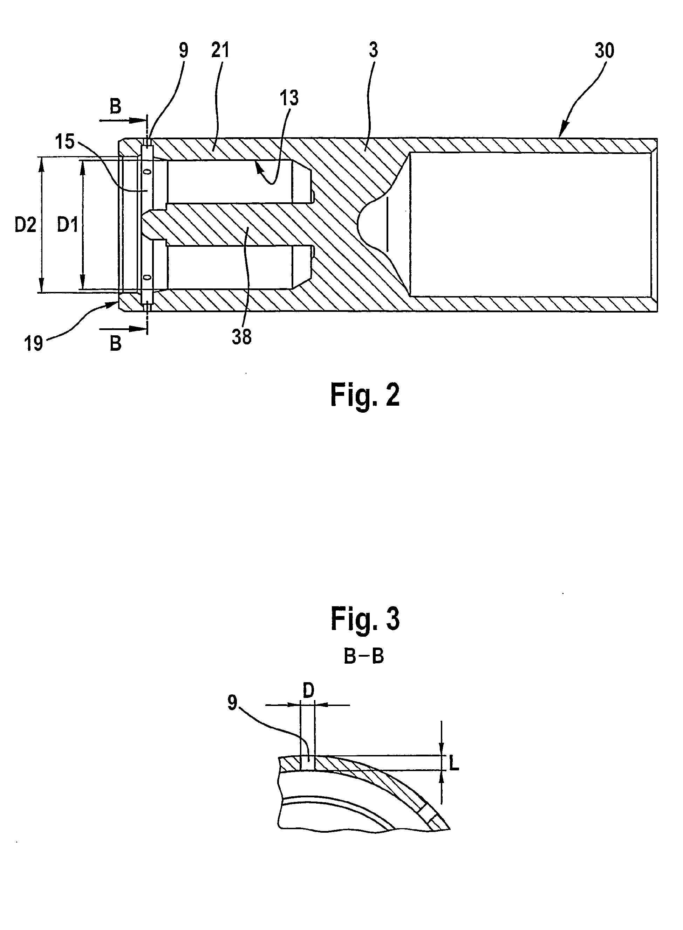

Fig. 2 zeigt den ersten Kolben 3 der ersten Ausführungsform im Längsschnitt und Fig. 3 zeigt eine Teilansicht des Kolbens 3 im Schnitt entlang der Linie B-B in Fig. 2.

Wie aus Fig. 2 hervorgeht, ist der Kolben 3 an der Seite 36 im wesentlichen topfförmig ausgebildet und weist einen ersten Innendurchmesser D1 und einen zweiten Innendurchmesser D2 auf, wobei der zweite Innendurchmesser D2 größer ist als der erste Innendurchmesser D1, wodurch die Herstellung des Kolbens 3 vereinfacht wird. Die Querbohrungen 9 sind am Umfang des Kolbens 3 gleichmäßig verteilt in einem Bereich zwischen den beiden Innendurchmessern D1, D2 angeordnet und münden in Ausnehmungen 15, die auf einer Innenseite 13 des Kolbens 3 vorgesehen sind. Die Ausnehmungen 15 sind, wie insbesondere aus Fig. 2 ersichtlich ist, als eine umlaufende, radiale Innennut ausgebildet.

Da die Wandstärke der topfförmigen Wandung 21 am Ende 19 nicht geschwächt wird, kann der Kolben 3 axiale Kräfte, die beim Anschlagen des Kolbens 3 an den zweiten Kolben 4 auf ihn wirken, ohne eine Deformierung aufnehmen.
Ein Anschlagen des Kolbens 3 tritt beispielsweise im Falle eines Kreisausfalles auf.

Wie aus Fig. 3 hervorgeht, weisen die Querbohrungen 9 einen Lochdurchmesser D und eine Lochlänge L auf, wobei das Verhältnis Lochlänge L zu Lochdurchmesser D einen Wert von ca. 1 aufweist, welches sich als besonders günstig herausgestellt hat. Die Innennut 15 reduziert somit die Lochlänge L und damit den Drosselwiderstand der Querbohrungen 9.

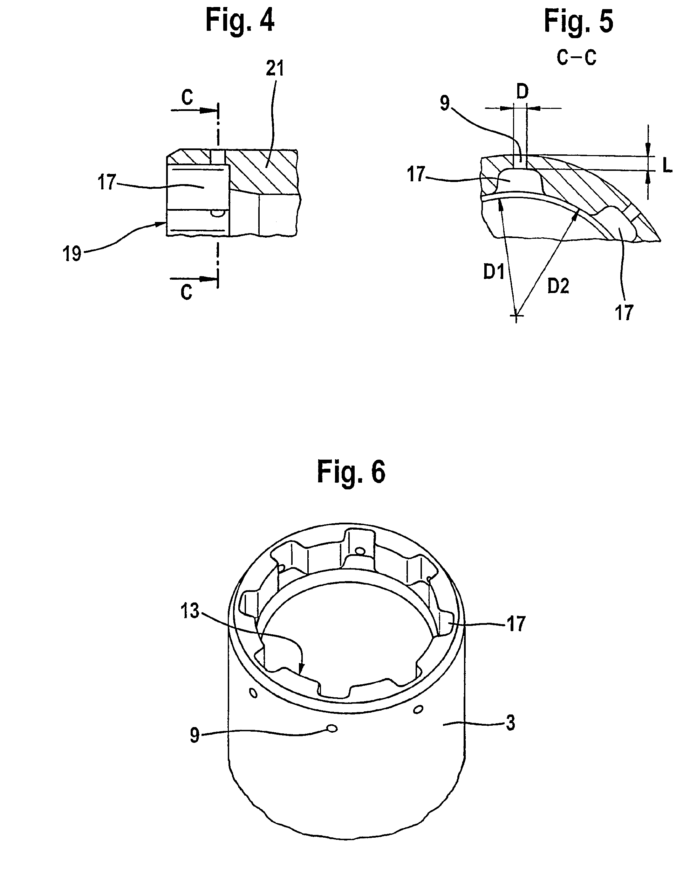

Die Fig. 4 bis 6 zeigen in Teilansicht und Schnitt einen ersten Kolben 3 eines zweiten Ausführungsbeispiels eines Hauptzylinders 1, welcher weitgehend mit der Ausführungsform nach den Fig. 1 bis 3 übereinstimmt, so dass übereinstimmende Merkmale mit übereinstimmenden Bezugsziffern gekennzeichnet sind, und auf eine Wiederholung diesbezüglicher Beschreibungsteile verzichtet wird. Nachstehend sei daher ausschließlich auf die wesentlichen Unterschiede eingegangen.

Insbesondere aus Fig. 5, die einen Schnitt entlang der Linie C-C in Fig. 4 zeigt, und aus Fig. 6 ist ersichtlich, dass die Querbohrungen 9 in Ausnehmungen 17 münden, welche als Zahnzwischenräume eines Zahnprofils auf der Innenseite 13 des Kolbens 3 ausgebildet sind. Die Ausnehmungen 17 erstrecken sich in axialer Richtung bis zum Ende 19 des Kolbens 3, wodurch eine Herstellung mittels Tiefziehverfahrens des Kolbens 3 ermöglicht wird, wobei die Ausnehmungen 17 ohne einen zusätzlichen Bearbeitungsschritt hergestellt werden können.

Bei dieser Ausführungsform wird die Wandstärke der topfförmigen Wandung 21 am Ende 19 nur partiell geschwächt, wodurch auch hier die Aufnahme von axialen Kräften des Kolbens 3 ohne Deformierung erfolgen kann.

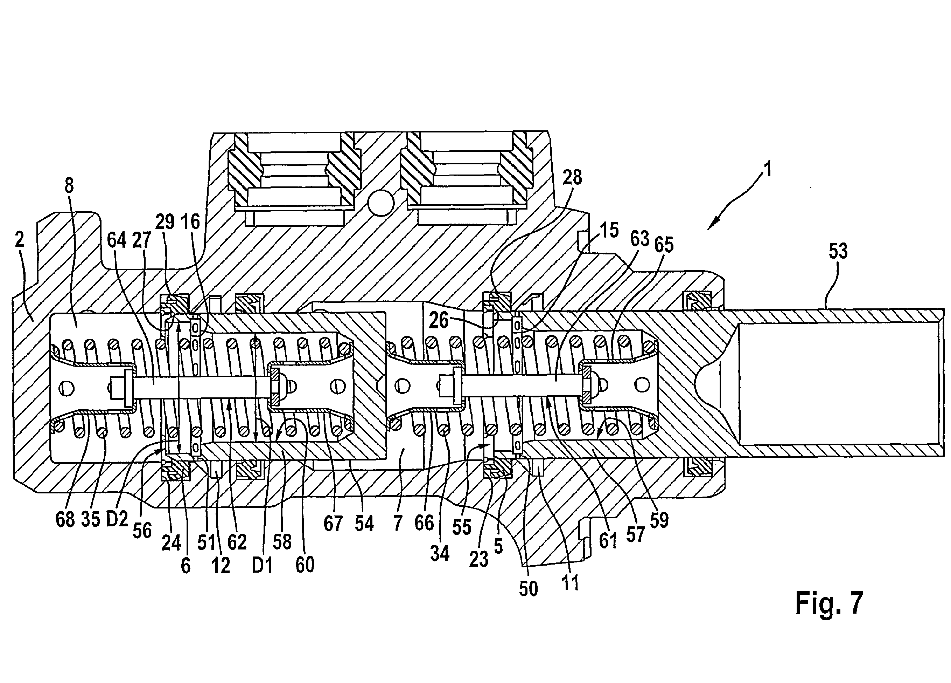

Die Fig. 7 bis 9 zeigen in Teilansicht und Schnitt ein drittes Ausführungsbeispiel eines Hauptzylinders 1, welcher weitgehend mit den beiden voran beschriebenen Ausführungsformen nach den Fig. 1 bis 6 übereinstimmt, so dass übereinstimmende Merkmale mit übereinstimmenden Bezugsziffern gekennzeichnet sind, und auf eine Wiederholung diesbezüglicher Beschreibungsteile verzichtet wird. Nachstehend sei daher ausschließlich auf die wesentlichen Unterschiede eingegangen.

Der Hauptzylinder 1 der dritten Ausführungsform umfasst einen ersten und einen zweiten, in dem Gehäuse 2 verschiebbaren Kolben 53,54 mit einer auf einer Seite 55,56 im wesentlichen topfförmigen Wandung 57,58.

Im Vergleich zu den ersten beiden Ausführungsformen weist der Hauptzylinder 1 der dritten Ausführungsform Federpakete 61,62 auf, mittels welchen die Kolben 53,54 vorgespannt sind. Die Federpakete 61,62 umfassen jeweils die Druckfeder 34,35, einen Spannstift 63,64 sowie jeweils zwei Spannhülsen 65,66,67,68, wodurch ein gemäß Fig. 1 dargestellter zentrisch angeordneter Zapfen entfällt. Dadurch ist es möglich, die Kolben 53,54 relativ einfach als Kunststoffteil oder als metallisches Drehteil herzustellen.

In der topfförmigen Wandung 57,58 weisen die Kolben 53,54 Querbohrungen 50,51 auf, die am Umfang der Kolben 53,54 in einem Bereich zwischen den beiden Innendurchmessern D1, D2 gleichmäßig verteilt angeordnet sind und in Ausnehmungen 15,16 münden, die auf einer Innenseite 59,60 der Kolben 53,54 vorgesehen sind. Die Ausnehmungen 15,16 sind, wie gemäß dem Ausführungsbeispiel nach Fig. 2, als eine umlaufende, radiale Innennut ausgebildet.

Die zwei hintereinander angeordneten Kolben 53,44 des Hauptzylinders 1 sind in ihrem Aufbau und ihrer Funktionsweise nahezu identisch, so dass nur der erste Kolben 53 weiter beschrieben wird.

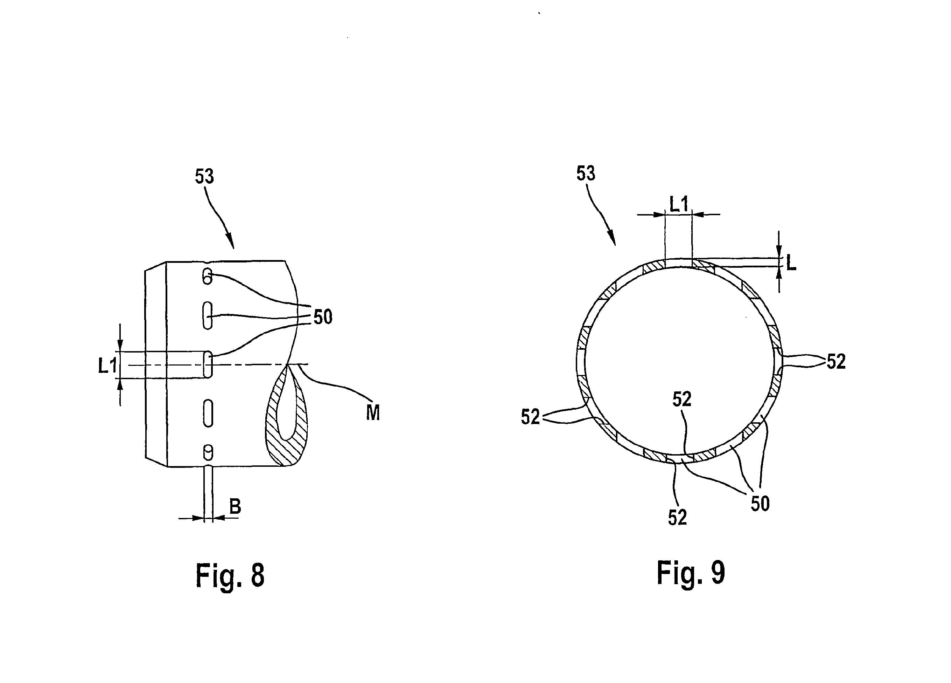

Wie aus Fig. 8, welche eine Teilansicht des ersten Kolbens 53 zeigt, hervorgeht, weisen die Querbohrungen 50 die Form eines Langloches mit einer Länge L1 und einer Breite B auf. Die Ausgestaltung der Querbohrungen 50 als Langloch hat den Vorteil, dass dadurch der Drosselwiderstand weiter reduziert werden kann.

Insbesondere aus Fig. 9, welche eine Teilansicht des zweiten Kolbens 53 im Schnitt im Bereich der Querbohrungen zeigt, ist ersichtlich, dass die Querbohrungen 50 eine Lochlänge L aufweisen. Das Verhältnis Lochlänge L zu Breite B weist einen Wert von ca. 1 auf, welches sich als besonders günstig herausgestellt hat. Die Innennut 15 reduziert somit die Lochlänge L und damit den Drosselwiderstand der Querbohrungen 50.

Weiter ist ersichtlich, dass gegenüberliegende Querbohrungen 50 parallele Begrenzungsflächen 52 aufweisen, wobei die Querbohrungen 50 beispielsweise durch Umformen wie z.B. Stanzen oder durch Verfahren eines Bohrers in radialer Richtung zur Längsachse M des Kolbens 53 herstellbar sind.

### Bezugszeichenliste

- 1: Hauptzylinder
- 2: Gehäuse
- 3: Kolben
- 4: Kolben
- 5: Dichtelement
- 6: Dichtelement
- 7: Druckraum
- 8: Druckraum
- 9: Querbohrung
- 10: Querbohrung
- 11: Nachlaufraum
- 12: Nachlaufraum
- 13: Innenseite
- 14: Innenseite
- 15: Ausnehmung
- 16: Ausnehmung
- 17: Ausnehmung

- 19: Ende
- 20: Ende
- 21: Wandung
- 22: Wandung
- 23: Ringnut
- 24: Ringnut

- 26: Innendichtlippe
- 27: Innendichtlippe
- 28: Außendichtlippe
- 29: Außendichtlippe
- 30: Außenseite
- 31: Außenseite
- 32: Druckmittelkanal
- 33: Druckmittelkanal
- 34: Druckfeder
- 35: Druckfeder
- 36: Seite
- 37: Seite
- 38: Zapfen
- 39: Zapfen
- 40: Ende
- 41: Ende
- 42: Anschlag
- 43: Anschlag
- 44: Hülse
- 45: Hülse
- 46: Kragen
- 47: Kragen
- 48: Kragen
- 49: Kragen
- 50: Querbohrung
- 51: Querbohrung
- 52: Bezugsfläche
- 53: Kolben
- 54: Kolben
- 55: Seite
- 56: Seite
- 57: Wandung
- 58: Wandung
- 59: Innenseite
- 60: Innenseite
- 61: Federpaket
- 62: Federpaket
- 63: Spannstift
- 64: Spannstift
- 65: Spannhülse
- 66: Spannhülse
- 67: Spannhülse
- 68: Spannhülse

- A: Betätigungsrichtung
- D: Lochdurchmesser
- D1: Durchmesser
- D2: Durchmesser
- B: Breite
- L: Lochlänge
- L1: Länge
- M: Längsachse

## Patentansprüche

1. Hauptzylinder (1), insbesondere für ein geregeltes Bremssystem, mit wenigstens einem, in einem Gehäuse (2) verschiebbaren Kolben (3,4;53,54), der mittels eines, in einer Ringnut (23,24) des Gehäuses (2) angeordneten Dichtelementes (5,6) gegenüber einem Druckraum (7,8) abgedichtet ist, welcher durch im Kolben (3,4;53,54) ausgebildete Querbohrungen (9,10;50,51) mit einem drucklosen Nachlaufraum (11,12) verbindbar ist, **dadurch gekennzeichnet, dass** auf einer Innenseite (13,14) des Kolbens (3,4;53,54) Ausnehmungen (15,16,17) vorgesehen sind, in welche die Querbohrungen (9,10) münden.

2. Hauptzylinder nach Anspruch 1, **dadurch gekennzeichnet, dass** der Kolben (3,4;53,54) an einer Seite (36,37;55,56) eine im wesentlichen topfförmige Wandung (21,22;57,58) mit einem ersten Innendurchmesser (D1) und einem zweiten Innendurchmesser (D2) aufweist, wobei der zweite Innendurchmesser (D2) größer ist als der erste Innendurchmesser (D1), und dass die Querbohrungen (9,10;50,51) in einem Bereich zwischen dem ersten und dem zweiten Innendurchmesser (D1,D2) angeordnet sind.

3. Hauptzylinder nach Anspruch 2, **dadurch gekennzeichnet, dass** die Ausnehmungen (15,16) als umlaufende, radiale Innennut ausgebildet sind.

4. Hauptzylinder nach Anspruch 2, **dadurch gekennzeichnet, dass** die Ausnehmungen (17) als Zahnzwischenräume eines Zahnprofils auf der Innenseite (13,14) des Kolbens (3,4) ausgebildet sind.

5. Hauptzylinder nach Anspruch 4, **dadurch gekennzeichnet, dass** sich die Ausnehmungen (17) in axialer Richtung bis zu einem Ende (19,20) des Kolbens (3,4) erstrecken.

6. Hauptzylinder nach einem der Ansprüche 1 bis 5, **dadurch gekennzeichnet, dass** die Querbohrungen (9,10) eine Lochlänge (L) und einen Lochdurchmesser (D) aufweisen, wobei das Verhältnis Lochlänge (L) zu Lochdurchmesser (D) einen Wert von ca. 1 aufweist.

7. Hauptzylinder nach Anspruch 3, **dadurch gekennzeichnet, dass** gegenüberliegende Querbohrungen (50,51) parallele Begrenzungsflächen (52) aufweisen.

8. Hauptzylinder nach Anspruch 7, **dadurch gekennzeichnet, dass** die Querbohrungen (50,51) die Form eines Langloches aufweisen.

9. Hauptzylinder nach Anspruch 8, **dadurch gekennzeichnet, dass** die Querbohrungen (50,51) durch Umformen herstellbar sind.

10. Hauptzylinder nach Anspruch 8, **dadurch gekennzeichnet, dass** die Querbohrungen (50,51) durch Verfahren eines Bohrers in radialer Richtung zu einer Längsachse (M) des Kolbens (53,54) herstellbar sind.

11. Hauptzylinder nach Anspruch 9 oder 10, **dadurch gekennzeichnet, dass** die Querbohrungen (50,51) eine Lochlänge (L), eine Länge (L1) und eine Breite (B) aufweisen, wobei das Verhältnis Lochlänge (L) zu Breite (B) einen Wert von ca. 1 aufweist.

12. Hauptzylinder nach einem der vorangegangenen Ansprüche, **dadurch gekennzeichnet, dass** vier bis vierundzwanzig Querbohrungen (9,10;50,51) gleichmäßig verteilt am Umfang des Kolbens (3,4;53,54) angeordnet sind.

## Claims

1. Master cylinder (1), especially for a controlled brake system, comprising at least one piston (3, 4; 53, 54) displaceable in a housing (2), which is sealed in relation to a pressure chamber (7, 8) by means of a sealing element (5, 6) arranged in an annular groove (23, 24) of the housing (2), said pressure chamber being connectable to an unpressurized supply chamber (11, 12) by means of transverse bores (9, 10; 50, 51) provided in the piston (3, 4; 53, 54),
**characterized in that** recesses (15, 16, 17), into which the transverse bores (9, 10) open, are arranged on an inside surface (13, 14) of the piston (3, 4; 53, 54).

2. Master cylinder as claimed in claim 1,
**characterized in that** the piston (3, 4; 53, 54) has on one side (36, 37; 55, 56) a substantially bowl-shaped wall (21, 22; 57, 58) with a first inside diameter (D1) and a second inside diameter (D2), with the second inside diameter (D2) being larger than the first inside diameter (D1), and **in that** the transverse bores (9, 10; 50, 51) are arranged in a zone between the first and second inside diameters (D1, D2).

3. Master cylinder as claimed in claim 2,
**characterized in that** the recesses (15, 16) are configured as a circumferential radial inside groove.

4. Master cylinder as claimed in claim 2,
**characterized in that** the recesses (17) are configured as tooth interspaces of a toothed profile on the inside surface (13, 14) of the piston (3, 4).

5. Master cylinder as claimed in claim 4,
**characterized in that** the recesses (17) extend in an axial direction until an end (19, 20) of the piston (3, 4).

6. Master cylinder as claimed in any one of claims 1 to 5,
**characterized in that** the transverse bores (9, 10) have a length of bore (L) and a diameter of bore (D), and the ratio of the length of bore (L) relative to the diameter of bore (D) has a value of roughly 1.

7. Master cylinder as claimed in claim 3,
**characterized in that** opposed transverse bores (50, 51) have parallel boundary surfaces (52).

8. Master cylinder as claimed in claim 7,
**characterized in that** the transverse bores (50, 51) have the shape of an oblong hole.

9. Master cylinder as claimed in claim 8,
**characterized in that** the transverse bores (50, 51) can be manufactured by shaping.

10. Master cylinder as claimed in claim 8,
**characterized in that** the transverse bores (50, 51) can be manufactured by displacing a drill in a radial direction relative to a longitudinal axis (M) of the piston (53, 54).

11. Master cylinder as claimed in claim 9 or 10,
**characterized in that** the transverse bores (50, 51) have a length of bore (L), a length L1) and a width (B), and the ratio of length of bore (L) to width (B) has a value of roughly 1.

12. Master cylinder as claimed in any one of the preceding claims,
**characterized in that** four to twenty-four transverse bores (9, 10; 50, 51) are arranged in an evenly distributed way at the periphery of the piston (3, 4; 53, 54).

## Revendications

1. Cylindre principal (1), en particulier pour un système de freinage régulé, avec au moins un piston (3, 4 ; 53, 54) pouvant coulisser dans un boîtier (2) et qui est rendu étanche, au moyen d'un élément d'étanchéité (5, 6) disposé dans une rainure annulaire (23, 24) du boîtier (2), par rapport à une chambre sous pression (7, 8) laquelle peut être reliée à une chambre complémentaire (11, 12) hors pression, par des trous transversaux (9, 10 ; 50, 51) réalisés dans le piston (3, 4 ; 53, 54), **caractérisé en ce que** sur un côté intérieur (13, 14) du piston (3, 4 ; 53, 54) sont prévus des évidements (15, 16, 17) dans lesquels les trous transversaux (9, 10) débouchent.

2. Cylindre principal selon la revendication 1, **caractérisé en ce que** le piston (3, 4 ; 53, 54) présente sur un côté (36, 37 ; 55, 56), une paroi (21, 22 ; 57, 58) sensiblement en forme de pot, avec un premier diamètre intérieur (D1) et un second diamètre intérieur (D2), le second diamètre intérieur (D2) étant supérieur au premier diamètre intérieur (D1), et **en ce que** les trous transversaux (9, 10 ; 50, 51) sont disposés dans une zone entre le premier et le second diamètre intérieur (D1, D2).

3. Cylindre principal selon la revendication 2, **caractérisé en ce que** les évidements (15, 16) sont réalisés sous la forme d'une rainure intérieure radiale, périphérique.

4. Cylindre principal selon la revendication 2, **caractérisé en ce que** les évidements (17) sont réalisés sous la forme d'entredents d'un profilé denté sur le côté intérieur (13, 14) du piston (3, 4).

5. Cylindre principal selon la revendication 4, **caractérisé en ce que** les évidements (17) s'étendent dans la direction axiale jusqu'à une extrémité (19, 20) du piston (3, 4).

6. Cylindre principal selon l'une des revendications 1 à 5, **caractérisé en ce que** les trous transversaux (9, 10) présentent une longueur de trou (L) et un diamètre de trou (D), leur rapport longueur de trou (L) au diamètre de trou (D) ayant une valeur d'environ 1.

7. Cylindre principal selon la revendication 3, **caractérisé en ce que** des trous transversaux (50, 51) opposés présentent des surfaces de délimitation (52) parallèles.

8. Cylindre principal selon la revendication 7, **caractérisé en ce que** les trous transversaux (50, 51) ont la forme d'un trou oblong.

9. Cylindre principal selon la revendication 8, **caractérisé en ce que** les trous transversaux (50, 51) peuvent être réalisés par déformation.

10. Cylindre principal selon la revendication 8, **caractérisé en ce que** les trous transversaux (50, 51) peuvent être réalisés par déplacement d'un foret dans la direction radiale à un axe longitudinal (M) du piston (53, 54).

11. Cylindre principal selon la revendication 9 ou 10, **caractérisé en ce que** les trous transversaux (50, 51) présentent une longueur de trou (L), une longueur (L1) et une largeur (B), le rapport longueur de trou (L) à la largeur (B) présentant une valeur d'environ 1.

12. Cylindre principal selon l'une des revendications précédentes, **caractérisé en ce que** de quatre à vingt-quatre trous transversaux (9, 10; 50, 51) sont uniformément répartis sur le pourtour du piston (3, 4 ; 53, 54).
